(19) Europäisches Patentamt
European Patent Office
Office européen des brevets

(11) **EP 2 984 625 B1**

## (12) FASCICULE DE BREVET EUROPEEN

(45) Date de publication et mention
de la délivrance du brevet:
**08.11.2017 Bulletin 2017/45**

(51) Int Cl.:
***G06T 7/73*** *(2017.01)* ***G06T 7/20*** *(2017.01)*

(21) Numéro de dépôt: **14716311.7**

(86) Numéro de dépôt international:
**PCT/EP2014/057135**

(22) Date de dépôt: **09.04.2014**

(87) Numéro de publication internationale:
**WO 2014/166986 (16.10.2014 Gazette 2014/42)**

(54) **PROCEDE D'ESTIMATION DE LA DEVIATION ANGULAIRE D'UN ELEMENT MOBILE RELATIVEMENT A UNE DIRECTION DE REFERENCE**

VERFAHREN ZUR MESSUNG DER WINKELABWEICHUNG EINES MOBILEN ELEMENTS BEZÜGLICH EINER REFERENZRICHTUNG

METHOD FOR ESTIMATING THE ANGULAR DEVIATION OF A MOBILE ELEMENT RELATIVE TO A REFERENCE DIRECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2013 FR 1353295**

(43) Date de publication de la demande:
**17.02.2016 Bulletin 2016/07**

(73) Titulaires:
• **Softbank Robotics Europe**
**75015 Paris (FR)**
• **Association pour la Recherche et le Développement**
**des Méthodes et Processus Industriels (ARMINES)**
**75272 Paris Cedex 06 (FR)**

(72) Inventeurs:
• **WIRBEL, Emilie**
**F-75015 Paris (FR)**
• **DURIEZ, Franck**
**F-91240 Saint-Michel-sur-Orge (FR)**
• **DE LA FORTELLE, Arnaud**
**F-75116 Paris (FR)**
• **STEUX, Bruno**
**F-78400 Chatou (FR)**
• **BONNABEL, Silvère**
**F-92100 Boulogne Billancourt (FR)**

(74) Mandataire: **Nguyen Van Yen, Christian Marks & Clerk France Conseils en Propriété Industrielle Immeuble Visium 22, Avenue Aristide Briand 94117 Arcueil Cedex (FR)**

(56) Documents cités:
• **ERIC ROYER ET AL: "Monocular Vision for Mobile Robot Localization and Autonomous Navigation", INTERNATIONAL JOURNAL OF COMPUTER VISION, KLUWER ACADEMIC PUBLISHERS, BO, vol. 74, no. 3, 13 janvier 2007 (2007-01-13), pages 237-260, XP019534965, ISSN: 1573-1405, DOI: 10.1007/S11263-006-0023-Y**
• **MONTIEL J M M ET AL: "A visual compass based on SLAM", ROBOTICS AND AUTOMATION, 2006. ICRA 2006. PROCEEDINGS 2006 IEEE INTERN ATIONAL CONFERENCE ON ORLANDO, FL, USA MAY 15-19, 2006, PISCATAWAY, NJ, USA,IEEE, 15 mai 2006 (2006-05-15), pages 1917-1922, XP010921548, DOI: 10.1109/ROBOT.2006.1641986 ISBN: 978-0-7803-9505-3**
• **BELLOTTO ET AL: "Appearance-based localization for mobile robots using digital zoom and visual compass", ROBOTICS AND AUTONOMOUS SYSTEMS, ELSEVIER SCIENCE PUBLISHERS, AMSTERDAM, NL, vol. 56, no. 2, 29 janvier 2008 (2008-01-29), pages 143-156, XP022437630, ISSN: 0921-8890, DOI: 10.1016/J.ROBOT.2007.07.001**

• EMILIE WIRBEL ET AL: "Humanoid robot navigation: From a visual SLAM to a visual compass", NETWORKING, SENSING AND CONTROL (ICNSC), 2013 10TH IEEE INTERNATIONAL CONFERENCE ON, IEEE, 12 avril 2013 (2013-04-12), pages 678-683, XP032431536, DOI: 10.1109/ICNSC.2013.6548820 ISBN: 978-1-4673-5198-0

**Description**

L'invention concerne un procédé d'estimation de la déviation angulaire d'un élément mobile relativement à une direction de référence et s'applique notamment au domaine de la navigation.

Pour estimer le cap d'un élément mobile tel un robot, une première technique consiste à utiliser son odométrie, c'est-à-dire la mesure de son déplacement. Pour cela, des mesures en provenance de différents capteurs embarqués peuvent être exploitées. Ainsi, pour un robot à roues il est possible d'utiliser des odomètres de type encodeurs rotatifs situés dans les roues. Un des inconvénients de cette technique est qu'elle produit une estimation dérivant significativement dans le temps.

Une deuxième technique existante consiste à mettre en oeuvre des capteurs métriques tels qu'un télémètre laser ou une caméra 3D pour se repérer par rapport à une carte représentant un environnement de navigation. Les méthodes s'appuyant sur cette technique sont désignées par l'acronyme SLAM (Simultaneous Localization And Mapping), la carte étant dans ce cas également construite et enrichie pendant la navigation du robot. Cette solution présente plusieurs inconvénients. En effet, il faut intégrer ces capteurs dans l'architecture du robot. Cela implique des coûts d'implémentation importants et requière une puissance de calcul significative pour générer une carte et déterminer la position du robot.

Une troisième technique existante se base sur l'utilisation d'une centrale inertielle à six axes. Cette centrale inertielle est habituellement composée de trois gyroscopes et de trois accéléromètres et peut notamment donner le cap du robot. De telles centrales souffrent également d'un phénomène de dérive de mesure ou bien sont très couteuses. Cette technique n'est donc pas adaptée pour une mise en oeuvre dans un robot à faible coût d'implémentation.

Les documents "Monocular Vision for Mobile Robot Localization and Autonomous Navigation", Eric Royer et al. IJCV 2007, ainsi que "A visual compass based on SLAM", Montiel J.M.M et al., ICRA 2006 décrivent des méthodes de localisation par vision, en calculant notamment une déviation angulaire à partir de la correspondances de points d'intérêts entre une image courante et une image de référence.

Les documents "Appearance-based localization for mobile robots using digital zoom and visual compass", Bellotto et al., Robotics and autonomous systems, 2008, ainsi que "Humanoid robot navigation: From visual SLAM to a visual compass", Wirbel E. et al., ICNSC 2013, décrivent des méthodes de localisation de robots mobiles à partir des images d'une caméra. Ainsi, il apparaît que les concepteurs de robots n'ont à disposition aucune technique leur permettant d'obtenir une estimation précise de cap tout en minimisant les coûts d'implémentation.

Un but de l'invention est notamment de pallier les inconvénients précités.

A cet effet l'invention a pour objet un procédé d'estimation de la déviation angulaire d'un élément mobile relativement à une direction de référence selon la revendication 1. L'utilisation du procédé d'estimation de la déviation angulaire d'un robot relativement à une direction de référence permet d'éviter les erreurs d'estimation propre à l'odométrie.

Selon un aspect de l'invention, les points d'intérêt sont associés à des descripteurs correspondant à des vecteurs binaires, l'étape de détermination des paires étant mise en oeuvre par une comparaison de ces vecteurs deux à deux, un couple de points d'intérêt étant identifié lorsque les deux vecteurs de deux points d'intérêt sont considérés comme étant les plus proches par rapport à d'autres vecteurs candidats associés à d'autres points d'intérêt.

La déviation angulaire est par exemple déterminée suivant les trois axes X, Y, Z d'un référentiel orthonormé fixe par rapport à l'élément mobile.

Dans un mode de réalisation, le procédé comprend une étape de vérification de la qualité de l'estimation de la déviation angulaire, la qualité étant considérée suffisante lorsque le nombre de paires de points d'intérêt appariés dépasse une valeur seuil prédéfinie.

Selon un aspect de l'invention, une nouvelle image de référence est acquise lorsque la qualité est considérée insuffisante.

Avantageusement, ce contrôle de qualité permet de garder une estimation de la déviation angulaire fiable alors que l'élément mobile se déplace.

La fréquence de rafraichissement de l'image de référence est par exemple adaptée en fonction de la qualité des points d'intérêt, ladite qualité étant estimée à partir du taux de points d'intérêt corrects et l'image de référence étant mise à jour dès que ce taux est inférieur à une valeur de seuil prédéfinie.

La fréquence de rafraichissement de l'image courante est adaptée en fonction de la distance moyenne estimée entre les points d'intérêts identifiés dans l'image courante, la fréquence de rafraichissement étant augmentée lorsque les points d'intérêt se rapprochent les uns des autres.

La direction de référence correspond par exemple à un cap cible que doit suivre l'élément mobile pour se déplacer, des commandes pour contrôler le mouvement de l'élément mobile étant déterminées et appliquées de manière à minimiser la déviation angulaire estimée par le procédé.

L'image de référence est par exemple choisie de manière à ce qu'elle reste au moins partiellement dans le champ de vision d'un capteur chargé d'acquérir l'image courante afin qu'un nombre minimum prédéfini de points d'intérêt puissent être appariés.

Dans un mode de réalisation, la déviation angulaire initialement estimée est de $\alpha$ radians par rapport à un cap cible que doit suivre l'élément mobile pour se déplacer. La direction de référence correspond ensuite au cap cible auquel s'ajoute un écart angulaire de $-\alpha/2$

radians, des commandes pour contrôler le mouvement de l'élément mobile étant déterminées et appliquées de manière à ce que la déviation angulaire estimée par la suite soit la plus proche possible de +α/2 radians.

Selon un aspect de l'invention, l'image de référence est obtenue par un capteur d'images embarqué sur l'élément mobile et dirigé dans la direction de référence au moment de la prise de vue.

L'invention a aussi pour objet un procédé d'estimation de la position angulaire d'un élément mobile dans un repère fixe par rapport à un espace de navigation, le procédé comprenant les étapes suivantes : acquisition d'un panorama composé d'une pluralité d'images couvrant l'espace de navigation, une image du panorama étant représentative d'une direction partant de l'élément mobile ; estimation de la position angulaire du mobile par odométrie ; sélection d'une image de référence parmi les images du panorama, ladite image correspondant à la position angulaire estimée à l'étape précédente ; estimation affinée de la position angulaire de l'élément mobile, ladite position angulaire étant déduite d'une dérive angulaire estimée par application du procédé d'estimation de la déviation angulaire.

L'élément mobile est par exemple un robot. Ce robot peut être de type humanoïde.

Alternativement, l'élément mobile peut être une voiture.

L'invention a aussi pour objet un robot humanoïde comprenant des moyens adaptés pour mettre en oeuvre le procédé décrit précédemment.

L'invention a aussi pour objet un programme d'ordinateur comportant des instructions pour l'exécution du procédé décrit précédemment, lorsque le programme est exécuté par un module de traitement de données.

D'autres caractéristiques et avantages de l'invention apparaîtront à l'aide de la description qui suit donnée à titre illustratif et non limitatif, faite en regard des dessins annexés parmi lesquels :

- la figure 1 illustre le procédé schématiquement les étapes d'un procédé d'estimation de déviation angulaire relativement à une direction de référence, ladite direction de référence étant associée à une image de référence appelée dans la suite de la description image de référence ;
- la figure 2 donne un exemple technique de contrôle de la trajectoire d'un robot utilisant le procédé d'estimation de la dérive angulaire ;
- la figure 3 donne un exemple d'image dans laquelle des points d'intérêt ont été détectés ;
- la figure 4 représente une paire de points appariés et illustre la manière dont une déviation angulaire peut être déterminée à partir de deux images ;
- la figure 5 donne un exemple de résultat pouvant être obtenu par application d'une technique d'identification de paires cohérentes telle que RANSAC ;
- la figure 6 illustre de manière simplifiée un procédé d'estimation de la position angulaire absolue d'un élément mobile ;
- la figure 7 illustre schématiquement la phase d'apprentissage du procédé d'estimation de la position angulaire absolue ;
- la figure 8 illustre une manière de choisir une image de référence dans un panorama et comment la position angulaire absolue du robot peut être estimée ;
- la figure 9 illustre une manière de contrôler les mouvements de rotation du robot à l'aide d'une estimation de position angulaire absolue ;
- la figure 10 représente un robot humanoïde.

Dans la description, l'invention est décrite avec l'exemple d'une mise en oeuvre sur un robot, et plus particulièrement sur un robot humanoïde. Cependant, l'invention est applicable à tout élément mobile. En particulier, l'invention est applicable à tout type de véhicules, bateaux ou aéronefs.

L'invention a notamment pour objet un procédé d'estimation de la déviation angulaire d'un robot relativement à une direction de référence. Cette déviation angulaire relative est définie comme étant l'angle entre ladite direction de référence et l'orientation du robot au moment de l'estimation. L'orientation du robot au moment de l'estimation est aussi appelée direction courante. La valeur de cet angle est par exemple déterminée dans le sens des aiguilles d'une montre en partant de la direction de référence.

Avantageusement, les estimations de la déviation angulaire relative du robot peuvent être utilisées pour contrôler ses mouvements avec précision, notamment pour effectuer des rotations autour d'un point fixe avec un angle donné ou pour effectuer un déplacement en ligne droite dans une direction donnée. En outre, le procédé permet d'estimer une position absolue du robot.

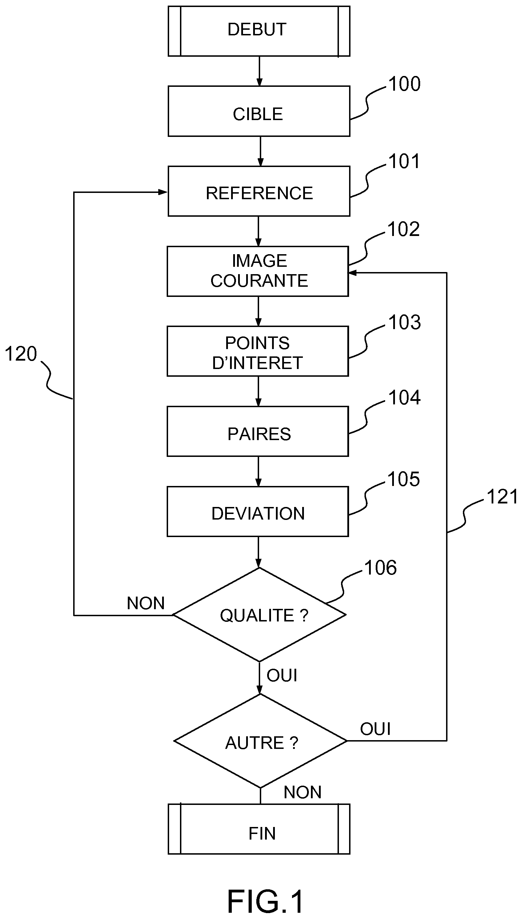

La figure 1 illustre schématiquement les étapes d'un procédé d'estimation de la déviation angulaire de l'orientation d'un robot relativement à une direction de référence, ladite direction de référence étant associée à une image appelée dans la suite de la description image de référence.

Dans un premier temps, une valeur de cap à atteindre appelée cap cible est déterminée 100. Cette valeur de cap cible correspond par exemple à un angle lorsque la déviation angulaire est estimée dans un système de coordonnées à deux dimensions ou bien à une ensemble de deux angles correspondant par exemple à une latitude et à une longitude lorsque la déviation angulaire est estimée dans un système de coordonnées à trois dimensions. Dans un mode de réalisation et dans le cas d'un robot humanoïde, le cap cible peut être choisi comme étant l'orientation du robot, ladite orientation correspondant par exemple à un vecteur perpendiculaire au torse du robot, passant par son centre et dirigé vers l'avant.

Une image de référence est ensuite acquise 101. L'image de référence peut-être obtenue à l'aide d'un capteur d'images embarqué sur le robot. Cette image de référence est représentative de la direction de référence par rapport à laquelle la déviation angulaire relative du robot est estimée par le procédé. Dans un mode de réalisation préféré, l'image de référence est une image acquise lorsque le capteur d'image est positionné dans la direction de référence.

Une image courante est à son tour acquise 102 à un instant donné appelé instant courant. Cette image courante correspond par exemple une image acquise à partir d'un capteur d'images embarqué sur le robot à l'instant courant. Dans le cas d'un robot humanoïde, ce capteur d'images peut être situé sur la tête, ladite tête pouvant être fixe ou mobile par rapport au corps du robot.

Un ensemble de points d'intérêts est alors identifié 103 dans l'image de référence et dans l'image courante.

Pour cela, une méthode de détection de points d'intérêt est utilisée, une telle méthode étant désignée par le mot détecteur dans la suite de la description. Par ailleurs, un point d'une image est appelé point d'intérêt lorsqu'il présente des caractéristiques permettant de l'identifier sur plusieurs images résultant de prises de vues différentes. Dans la pratique, un point d'intérêt correspond à une zone de plusieurs pixels identifiée par un pixel central et une échelle. A titre d'exemple, un point d'intérêt peut correspondre à une zone de quelques pixels présentant un fort contraste et correspondant à un angle d'armoire.

Lorsqu'un point d'intérêt a été identifié par le détecteur, un descripteur peut lui être associé. Un descripteur est un identifiant du point d'intérêt représenté habituellement sous forme binaire. Les descripteurs permettent notamment de comparer d'une image à l'autre des points d'intérêt identifiés. Un descripteur correspond par exemple à un vecteur binaire.

Les descripteurs de l'image de référence peuvent être regroupés dans un index 103 appelé index de référence.

Comme pour l'image de référence, des points d'intérêt sont identifiés par un détecteur pour cette image courante, un descripteur étant alors associé à chacun de ces points.

Une fois les points d'intérêts identifiés et caractérisés 103, une étape d'appariement 104 des points d'intérêts est mise en oeuvre. Cette étape 104 met en oeuvre la recherche pour chacun des points d'intérêts identifiés de l'image courante d'au moins un point d'intérêt lui correspondant dans l'image de référence. Pour cela, les descripteurs des points d'intérêts de l'image courante peuvent être comparés avec les descripteurs mémorisés dans l'index de référence.

Pour effectuer cette comparaison, différentes techniques peuvent être utilisées comme par exemple la technique désignée par le sigle KDTree. La technique KDTree permet de comparer rapidement un vecteur donné avec un index pré-calculé. Dans ce cas, pour chaque point d'intérêt identifié dans l'image courante, les deux plus proches voisins sont sélectionnés. Pour un point d'intérêt de l'image courante, les plus proches voisins sont des points d'intérêts de l'image de référence pour lesquels la différence entre leurs descripteurs et le descripteur d'un point d'intérêt de l'image courante est minimisée. Ensuite, si la distance au plus proche voisin est significativement plus faible que la distance au deuxième voisin, il est considéré que le plus proche voisin est apparié au point d'intérêt de l'image courante. Cette méthode permet d'éliminer une partie des paires de points erronées. En effet, si deux points d'intérêts différents dans l'image courante ont des descripteurs proches, les points d'intérêt de l'image de référence qui leurs seront comparés auront des distances proches. Cette technique permet donc de réduire le nombre d'appariements identifiés, mais permet également d'éviter que de trop nombreux points d'intérêts de l'image courante soient mal appariés.

Une étape 105 a ensuite pour objectif d'estimer la déviation angulaire relativement à direction de référence. Pour cela, les paires de points d'intérêt identifiées à l'étape précédente sont analysées. Un exemple de comparaison de deux paires de points d'intérêt est donné plus loin dans la description.

Dans un mode de réalisation, la déviation angulaire est déterminée suivant les trois axes X, Y, Z d'un référentiel orthonormé fixe par rapport au robot. Pour cela, deux paires de points peuvent être utilisées. Pour mettre en oeuvre les calculs, il est pris comme hypothèse que les points d'intérêts sont situés à une distance infinie du robot.

Il peut également être pris comme hypothèse que le robot tourne sur place. En effet, une rotation autour de l'axe Z se traduit par un déplacement des points de gauche à droite, autour de l'axe Y par un déplacement de haut en bas (ce qui peut se voir avec un seul point) et autour de l'axe X par une rotation autour du centre de l'image (ce qui nécessite deux points pour faire le calcul).

Une fois que la déviation angulaire a été estimée, il est vérifié 107 que la qualité de l'estimation est suffisante. Dans un mode de réalisation, la qualité est considérée comme suffisante lorsque le nombre de paires de points d'intérêt appariés dépasse une valeur seuil prédéfinie. Si ce n'est pas le cas, la qualité de l'estimation est considérée insuffisante et une nouvelle image de référence est acquise 120 pour poursuivre les estimations. Si c'est le cas, la qualité est considérée suffisante et une nouvelle image courante est acquise 121 de manière à suivre l'évolution de la déviation angulaire au cours du temps.

Pour ce qui est de la fréquence de renouvellement de l'image courante 121, celle-ci doit être choisie en fonction de l'environnement de navigation et de la vitesse du robot. La fréquence de rafraichissement de l'image courante est adaptée en fonction de la distance moyenne estimée entre les points d'intérêts. Plus les points d'intérêt sont proches les uns des autres, la fréquence de rafraichissement est élevée. Ainsi, lorsque le robot se déplace vers un mur, la fréquence de rafraichissement est augmentée.

Un des avantages fondamentaux de l'invention est que le calcul de la déviation nécessite une unique image représentant la direction de référence.

Dans un mode de réalisation, l'image de référence peut être mise à jour par rafraîchissement. Dans ce cas, la fréquence de rafraîchissement de l'image de référence peut être adaptée en cours de fonctionnement et non fixée a priori. La fréquence de rafraîchissement peut être mise à jour en fonction de la qualité des repères visuels et être adaptée automatiquement pour conserver une qualité minimum.

Un exemple de critère permettant de déclencher le rafraîchissement de l'image de référence est d'estimer la qualité de l'appariement et de renouveler l'image de référence uniquement si nécessaire, et ce avant que la qualité ne se dégrade. Cette qualité peut être estimée à partir du taux de points corrects obtenus après le calcul réalisé par l'algorithme RANSAC. Dès que ce taux est trop faible, c'est à dire inférieur à un seuil fixé a priori, une nouvelle image est prise. L'image de référence est ainsi rafraîchie. Le seuil peut être choisi de manière à ce que l'image précédente soit encore valide, afin de ne jamais perdre l'image de référence.

Selon l'environnement, il est donc possible qu'une unique image de référence soit suffisante pour la totalité de la trajectoire empruntée par l'élément mobile, par exemple dans le cas d'une rotation. La fréquence de référence n'est donc pas fixe, puisque l'image de référence n'est pas mise à jour de façon périodique mais uniquement lorsque la qualité de l'appariement faiblit.

En outre, la prise d'une image dans une direction de référence permet de contrôler le robot dans une direction inconnue du robot, en raison de la flexibilité des repères. Lorsque le robot avance dans une zone inconnue et que la référence devient obsolète, le rafraîchissement automatique de l'image de référence permet de reprendre une image plus adaptée au nouvel environnement.

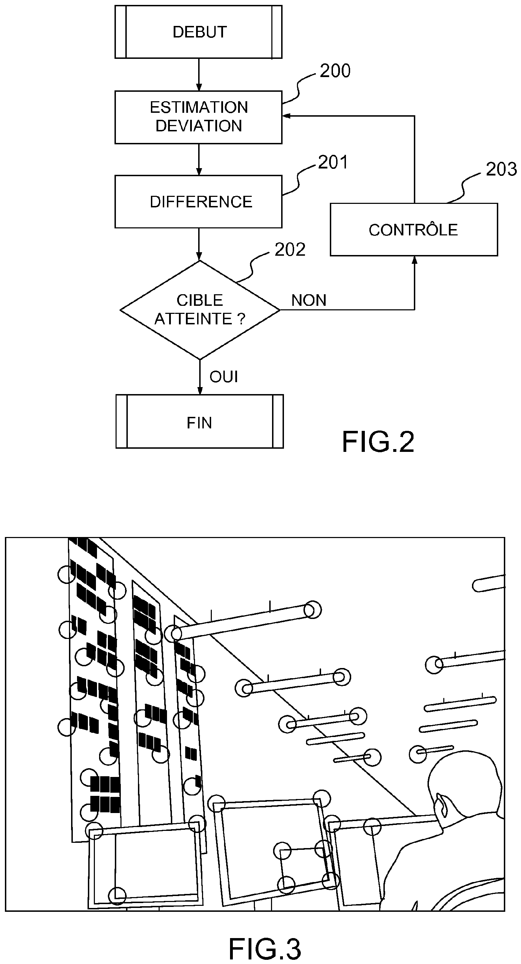

La figure 2 donne un exemple technique de contrôle de la trajectoire d'un robot utilisant le procédé d'estimation de la dérive angulaire.

Dans un premier temps, l'estimation de la déviation angulaire par rapport à une direction de référence est effectuée 200 comme décrit précédemment à l'aide de la figure 1.

L'objectif est alors d'utiliser l'estimation de la déviation angulaire (étape 107) par rapport à une cible (étape 100) de manière à contrôler la trajectoire du robot.

Ainsi, une différence 201 entre le cap cible et la déviation angulaire estimée est déterminée. La différence 201 correspond par exemple à un angle $\alpha$ pouvant être utilisé comme commande pour contrôler la trajectoire du robot.

Si cette différence est nulle, cela signifie que le cap cible est atteint 202. Si cette différence n'est pas nulle, la trajectoire du robot doit être corrigée 203 de manière à ce que le cap cible soit respecté. La différence est 201 est alors de nouveau déterminée afin de vérifier si le cap cible est atteint.

Dans le cas où le robot effectue une rotation sur place, c'est-à-dire autour d'un axe vertical le traversant, un asservissement peut être réalisé de la manière suivante. Dans un premier temps, le robot tourne la tête d'un angle égal à $\alpha/2$ relativement à la position de la tête lorsque celle-ci regarde vers l'avant du robot. Une nouvelle image de référence est alors acquise. Cette nouvelle image de référence va permettre de garantir qu'un maximum de point d'intérêt pourra être apparié correctement durant le contrôle de la rotation sur place. Le robot part donc avec une déviation angulaire équivalente à -$\alpha/2$ par rapport à la nouvelle direction de référence associée à cette nouvelle image de référence. Il peut alors être commandé pour atteindre une déviation angulaire relative à cette nouvelle direction de référence égale à $\alpha/2$. Pour cela, il suffit de contrôler le robot avec une commande de rotation en vitesse adaptée et de s'arrêter lorsque cette valeur de déviation est atteinte.

De manière générale, pour garder l'image de référence dans le champ de vision du robot lors de son déplacement, la déviation angulaire estimée peut être utilisée pour contrôler un mouvement de la tête et acquérir une image de référence de manière à ce qu'un nombre minimum de points d'intérêt puissent être appariés.

Dans le cas d'un déplacement en ligne droite du robot, l'objectif est de maintenir une déviation angulaire nulle par rapport au cap cible. Pour cela, le robot tourne la tête dans la direction correspondant au cap cible de manière à acquérir une image de référence. Ensuite, le mouvement du robot est contrôlé à l'aide de commandes de vitesse en translation et/ou en rotation de manière à maintenir une déviation angulaire nulle.

Il est possible de maintenir la position de la tête dans la direction du cap cible alors que le corps du robot bouge. En effet, la position de la tête du robot par rapport à son corps étant connue, le cap du robot peut être déduit directement.

Avantageusement, le procédé fonctionne même si la totalité des points d'intérêt identifiés dans l'image de référence ne reste pas visible par le capteur fournissant les images courantes. En effet, deux paires correctement appariées suffisent en théorie pour estimer la déviation angulaire. Cependant, plus le nombre de paires correctes est élevé, plus l'estimation de la déviation angulaire est bonne.

Toujours dans le cas d'un déplacement en ligne droite, l'odométrie du robot peut être utilisée pour estimer la distance parcourue et déterminer quand le robot doit s'arrêter. En effet, cela est plus fiable que d'utiliser une estimation de position car en réalité les points d'intérêt ne sont pas positionnés à l'infini. Plus le robot se rapproche des points d'intérêt, plus les distances entre eux sont dilatées, ce dont le modèle ne tient pas compte. Pour compenser cet effet, la qualité du modèle est surveillée 106 au cours du temps : dès qu'elle baisse significativement, l'image de référence est renouvelée, ce qui permet de rendre à nouveau valide l'hypothèse des points à l'infini.

L'utilisation du procédé d'estimation de la déviation angulaire d'un robot relativement à une direction de référence permet d'éviter les erreurs d'estimation propre à l'odométrie. Avantageusement, seules des commandes en vitesse déterminées en fonction de la déviation angulaire estimée peuvent être utilisées.

Il apparaît qu'une direction de référence est utilisée pour la tête dans le cas de la rotation sur place et de la rotation. Le corps du robot doit également suivre une direction cible qui est la même que la tête dans le cas d'une translation, et différente dans le cas d'une rotation.

Dans le cas où un robot humanoïde effectue une translation, la direction de référence et l'orientation de la tête peuvent être les mêmes. La tête et le corps du robot sont alors asservis pour suivre cette direction.

Dans le cas de la rotation et si $\alpha$ correspond à l'angle de la rotation à effectuer, La direction de référence pour la tête est alors $\alpha/2$ par rapport à la position de départ, tandis que la direction de référence pour le corps est $\alpha$ par rapport à la position de départ. Pendant la rotation, la tête est maintenue dans sa direction de référence afin de garder la même image pendant une rotation allant jusqu'à 180°, et le corps est asservi pour s'aligner sur la direction $\alpha$. Par rapport à la tête, le corps est donc au départ dans la direction $-\alpha/2$, et à l'arrivée dans la direction $\alpha/2$.

La figure 3 donne un exemple d'image dans laquelle des points d'intérêt ont été détectés. Dans cet exemple, un descripteur sensible aux zones de forts contrastes ainsi qu'aux coins des objets a été utilisé.

Dans le cadre du procédé selon l'invention, le détecteur doit être choisi de façon à ce que l'on puisse retrouver les mêmes points d'intérêt d'une image sur l'autre. Il doit donc être robuste à modifications résultantes notamment des mouvements du robot. Un exemple de modifications correspond à l'application d'un facteur d'échelle d'une prise de vue à l'autre lorsque que le robot est un mouvement, par exemple lorsque le robot se déplace dans la direction de l'image de référence. Un effet de flou résultant d'une prise de vue effectuée lorsque le robot est en mouvement peut aussi être introduit. Un changement de luminosité peut également intervenir entre deux prises de vue. Cela peut arriver lorsque le robot se déplace d'une zone bien éclairée vers une zone moins éclairée.

Dans un mode de réalisation préférée, le détecteur FAST (Features from Accelerated Segment Test) sur pyramide d'images est utilisé. Avantageusement, ce détecteur présente des propriétés adaptées pour son utilisation dans le cadre du procédé selon l'invention. Une première propriété est que l'extraction de points d'intérêt est extrêmement rapide. Il est ainsi possible d'extraire des centaines de points en quelques millisecondes sur une plateforme de calcul bas coût. L'extraction d'un nombre important de points d'intérêts améliore la robustesse du procédé en cas d'obstruction des points. Une autre propriété du détecteur FAST est qu'il est robuste en cas de prise de vue floue et en cas de changement de luminosité. Cela est particulièrement utile lorsque le procédé d'estimation de la dérive angulaire est utilisé en mouvement.

Il est à noter que le détecteur FAST lorsqu'il est utilisé seul n'est pas robuste aux changements d'échelle. Ce problème est résolu par la construction d'une pyramide d'images, c'est-à-dire une représentation multi-résolution de l'image.

Il est également possible d'utiliser d'autres détecteurs appartenant à l'état de la technique comme le détecteur de Harris, le détecteurs SURF (Speeded Up Robust Features) et le détecteur SIFT (Scale Invariant Feature Transform).

Pour chaque point significatif identifié par le détecteur, un descripteur est déterminé. Le type de descripteur choisi pour mettre en oeuvre le procédé d'estimation doit permettre d'apparier efficacement des points identifiés sur deux images. L'appariement est considéré comme efficace lorsqu'il permet de comparer les descripteurs des points d'intérêt identifiés sur deux images et d'identifier des paires, une paire correspondant à deux points identiques dans deux images différentes acquise dans un même environnement de navigation.

Dans un mode de réalisation préféré, le descripteur est un descripteur ORB (Oriented Fast and Rotated BRIEF). Ce descripteur est généré en comparant deux cent cinquante-six paires de pixels dans la zone définie par le détecteur, et d'en déduire un vecteur de deux cent cinquante-six bits. Avantageusement, la détermination d'un descripteur ORB est rapide à calculer car celui-ci est déterminé par une simple comparaison de pixels. En outre, il est très rapide de comparer deux descripteurs. En effet, un descripteur correspond à un vecteur binaire. Il est alors possible de la comparer deux à deux en utilisant des outils simples comme par exemple la distance de Hamming. Un autre avantage du descripteur ORB est qu'il est robuste lorsqu'il est appliqué sur des images floues et/ou en présence de changements de luminosité.

Cependant, le procédé d'estimation de la déviation angulaire relative n'est pas limité à l'utilisation de descripteurs ORB. D'autres descripteurs comme les descripteurs SIFT et SURF peuvent être utilisés.

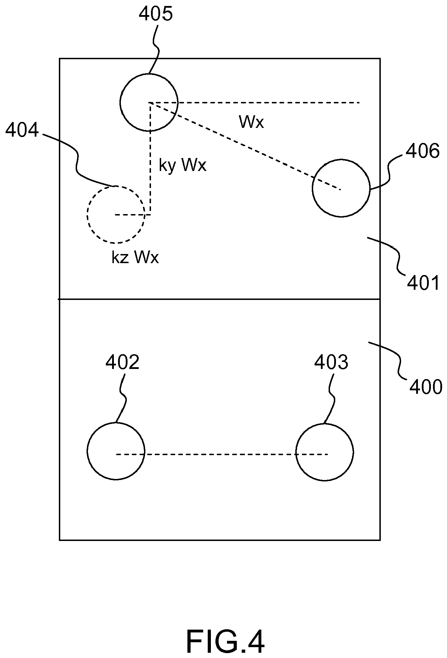

La figure 4 représente une paire de points appariés et illustre la manière dont une déviation angulaire peut être déterminée à partir de deux images.

Dans cet exemple, deux images 400, 401 sont représentées schématiquement. La première image 400 est une image de référence comprenant deux points d'intérêt 402, 403. La seconde image 401 est une image courante comprenant également deux points d'intérêt 405, 406. Ces différents points d'intérêt ont été appariés (étape 104). Ainsi une première paire est composée des points 402 et 405 et une seconde paire est composée des points 403 et 406.

La déviation angulaire (étape 105) peut être déterminée de la manière suivante. L'objectif est dans un premier temps d'obtenir le décalage angulaire à partir des mesures des décalages en pixels entre le deux paires de points. Il est pris comme hypothèses que les deux paires de points ont été correctement appariées et que le déplacement du robot entre les deux prises de vue résulte uniquement de rotations, c'est-à-dire que le mouvement réel est une rotation pure ou bien que les points sont positionnés à l'infini.

La rotation suivant l'axe des X est notée $w_x$ et peut être exprimée en radians en utilisant l'expression suivante :

$$w_x = arg\left(\frac{z'_1 - z'_2}{z1 - z_2}\right)$$

dans laquelle :

$z_1$ et $z'_1$ sont des nombres complexes correspondant aux coordonnées de la première paire de points d'intérêt 402, 405 situés dans l'image de référence 400 et l'image courante 401 respectivement ;
$z_2$ et $z'_2$ sont des nombres complexes correspondant aux coordonnées de la deuxième paire de points d'intérêt 403, 406 situés dans l'image de référence 400 et dans l'image courante 401 respectivement ;
arg() représente la fonction déterminant l'argument d'un nombre complexe.

Une quantité $o$ est ensuite déterminée en utilisant l'expression suivante :

$$o = z'_1 - z_1 \times e^{i\theta}$$

Le centre de l'image est noté $c$. $d$ est un nombre complexe tel que la partie réelle correspond à la déviation suivant l'axe X et la partie imaginaire la déviation suivant l'axe Y. $d$ peut donc être exprimé de la manière suivante :

$$d = o - \left(1 - e^{iw_x}\right) \times c$$

L'ouverture angulaire horizontale de la caméra est noté $o_h$ et l'ouverture angulaire verticale est notée $o_v$. $i_h$ désigne la largeur de l'image et $i_v$ désigne la hauteur en pixels. Les rotations $w_y$ et $w_z$ suivant les axes X, Y et Z peuvent être déterminées en utilisant les expressions suivantes :

$$w_y = d_y \frac{o_v}{i_v}$$

$$w_z = -d_x \frac{o_h}{i_h}$$

Cependant, il est possible que les hypothèses prises précédemment ne soient pas vérifiées dans la pratique. En effet, des couples de points peuvent être appariés alors qu'ils ne devraient pas l'être. Ces mauvais appariements peuvent être dus par exemple à l'apparition de nouveaux points qui étaient invisibles dans l'image de référence suite à un phénomène de parallaxe. Ces mauvais appariements peuvent également être la conséquence d'une précision imparfaite des descripteurs utilisés ou d'imprécisions sur la position des points d'intérêts. Ils peuvent aussi être dus à des objets situés trop près du robot et dont le déplacement d'une prise de vue à l'autre se traduit de façon complexe. Des objets en mouvement peuvent également induire de mauvais appariements.

Dans la description, l'ensemble composé d'un point d'intérêt de l'image de référence et d'un point d'intérêt de l'image courante lui étant apparié mais correspondant en réalité à un autre point est désigné dans la suite de la description par l'expression paire incohérente. Au contraire, une paire est appelée cohérente lorsque les points d'intérêts ont été correctement appariés.

Afin d'extraire parmi l'ensemble des paires de points identifiées à l'étape 106 les paires cohérentes, la technique suivante peut être utilisée. En considérant que l'ensemble des paires identifiées contient au moins une paire cohérente et que les paires cohérentes sont telles qu'un modèle calculé sur l'une d'entre elles donnera de bons résultats sur toutes les autres paires cohérentes et de mauvais résultats avec les paires incohérentes. Au contraire, un modèle calculé sur des paires incohérentes ne donnera de bons résultats que sur très peu de paires de points correspondant au hasard. Ce principe est mis en oeuvre notamment pas l'algorithme RANSAC (RANdom Sample Consensus). Il permet de trouver parmi un ensemble de points de données le modèle qui donne de bons résultats sur un maximum de points. Dans le cadre du procédé selon l'invention, le modèle peut notamment être mis en oeuvre grâce aux équations données précédemment. La qualification des résultats repose alors sur la détermination de la distance entre les points prédits par le modèle à partir des points d'intérêts de l'image de référence et les points appariés dans l'image courante.

Avantageusement, l'utilisation de la technique RANSAC requière peu de ressources calculatoires car les traitements sont effectués sur un nombre minimal de points, par exemple sur deux paires de points.

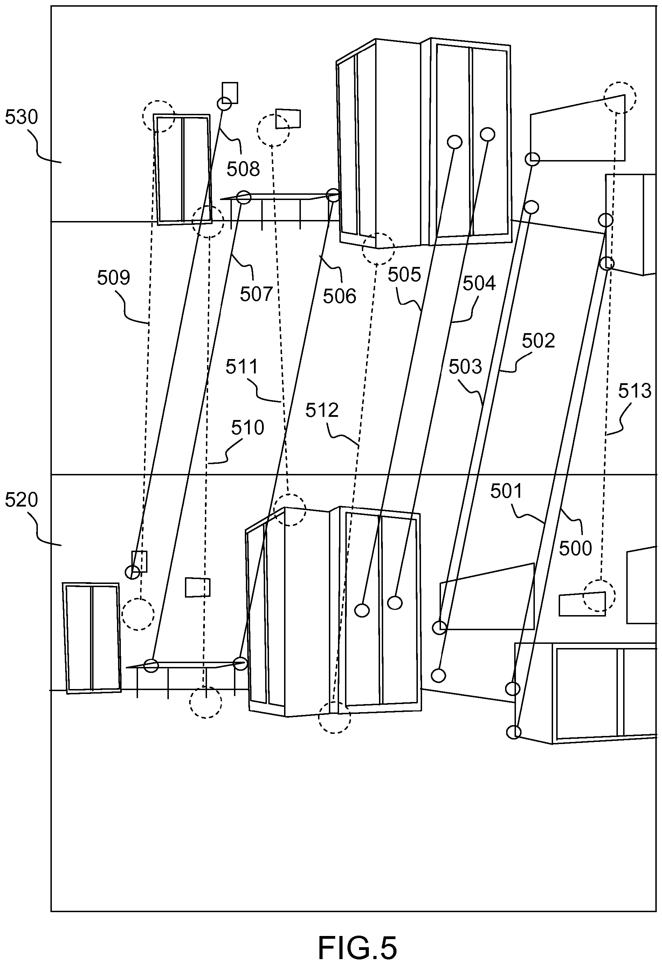

La figure 5 donne un exemple de résultat pouvant être obtenu par application d'une technique d'identification de paires cohérentes telle que RANSAC.

Une image de référence 530 et l'image courante 520 sont représentées ainsi que des paires cohérentes 500 à 508 et des paires incohérentes 509 à 513. Le robot a avancé entre les deux images. Il apparaît que les paires incohérentes correspondent à un mauvais appariement et que les paires cohérentes montrent une déviation globale de gauche à droite.

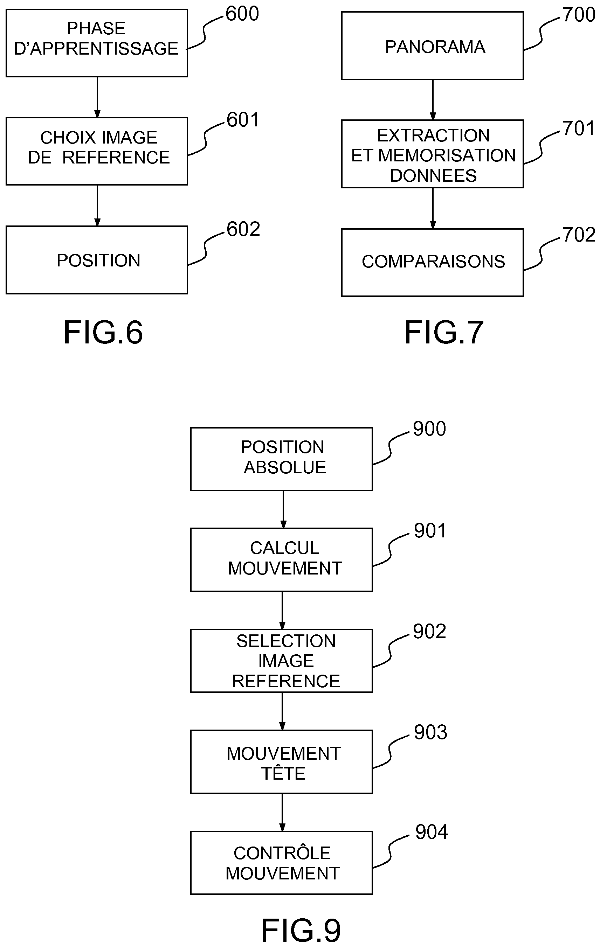

La figure 6 illustre de manière simplifiée un procédé d'estimation de la position angulaire absolue d'un élément mobile.

Le procédé décrit ci-après a pour objectif d'estimer la position angulaire absolue d'un robot. A la différence du procédé d'estimation décrit précédemment, ce procédé permet de déterminer l'orientation du robot non plus relativement au cap cible associé à une image de référence donné, mais de façon absolue dans un espace de navigation, c'est-à-dire dans l'espace de déplacement du robot. Ce procédé permet également de contrôler le mouvement du robot de manière à atteindre une position angulaire absolue notamment lorsque le robot tourne sur place.

Le procédé d'estimation de la position angulaire absolue comprend une phase d'apprentissage 600, une phase de choix d'une image de référence 601 parmi une pluralité d'images candidates et une phase d'estimation de la position angulaire 602.

Dans un mode de réalisation préféré, la phase d'estimation de la position angulaire 602 reprend les étapes du procédé d'estimation de la déviation angulaire relative tel que décrit précédemment.

La figure 7 illustre schématiquement la phase d'apprentissage du procédé d'estimation de la position angulaire absolue.

La phase d'apprentissage consiste dans un premier temps à capturer des images de référence 700 représentatives de l'espace de navigation.

A titre d'exemple, un capteur d'images embarqué peut être contrôlé pour effectuer un mouvement rotation de trois cent soixante radians autour du robot, et ce dans un plan horizontal.

L'ensemble des images prises pendant cette phase d'apprentissage est appelé panorama dans la suite de la description.

A titre d'exemple, un capteur d'images grand angle ou panoramique peut être utilisé pour cela. Cependant, il est à noter que ce type de capteur nécessite des lentilles spéciales et qu'elles déforment l'image. En outre, elles doivent être placées au sommet du robot pour ne pas être gênées par le robot lui-même.

Pour s'affranchir de ces limitations, il est possible d'utiliser un capteur d'images ayant un angle de prise de vue plus limité que ceux des capteurs décrits précédemment.

Dans le cas d'un robot humanoïde, le capteur d'images peut être intégré dans sa tête adaptée pour pouvoir tourner à trois cent soixante radians. Les images composant le panorama seront acquises sur l'ensemble du champ requis en profitant de la capacité du robot à tourner la tête et en mettant en oeuvre une rotation contrôlée de la tête par exemple en appliquant le procédé d'estimation de la déviation angulaire relative.

Alternativement, les mouvements de la tête peuvent être remplacés par une rotation sur place du robot. Cela peut être utile notamment lorsque la tête du robot ne peut pas tourner à trois cent soixante radians.

Les images de référence sont acquises de façon à ce qu'elles se recouvrent partiellement deux à deux. A titre d'exemple, deux images de référence voisines dans le panorama peuvent se recouvrir de moitié. En d'autres termes, ces deux images ont dans ce cas une demi-image en commun. Cette caractéristique implique qu'une image de référence donnée a potentiellement un ou plusieurs points d'intérêt en communs une ou plusieurs autres images de référence. Avantageusement, plus les zones de recouvrement sont importantes, plus l'estimation est fiable.

Pour chaque image de référence du panorama, des données leur étant associées peuvent être extraites et/ou mémorisées 701. Ces données correspondent par exemple aux points d'intérêt et à leurs descripteurs, à la position angulaire des images de référence par rapport à la position initiale du robot. La position angulaire initiale du robot peut en effet servir de référence. Les images de référence composant le panorama peuvent être mémorisées dans une mémoire interne au véhicule.

Les images de référence composant le panorama sont ensuite comparées les unes avec les autres 702. Pour cela, les points d'intérêts extraits des différentes images du panorama sont appariés comme décrit précédemment. A titre d'exemple, le résultat de ces comparaisons peut être mémorisé dans une matrice appelée matrice de confusion. Cette matrice est adaptée de manière à ce que chacune de ses cases comprend un nombre entier égal au nombre de points appariés pour deux images du panorama ayant été comparées. Il est alors possible de vérifier quel est le niveau de ressemblance entre les images du panorama.

L'enregistrement des images du panorama dans une mémoire non volatile permet de libérer de la mémoire vive de type RAM par exemple. Pour un accès rapide, seuls les descripteurs des points d'intérêt peuvent être maintenus dans la mémoire vive. En outre, la mémorisation des images du panorama dans une mémoire non volatile permet de conserver un panorama donné de façon durable même après un redémarrage du robot.

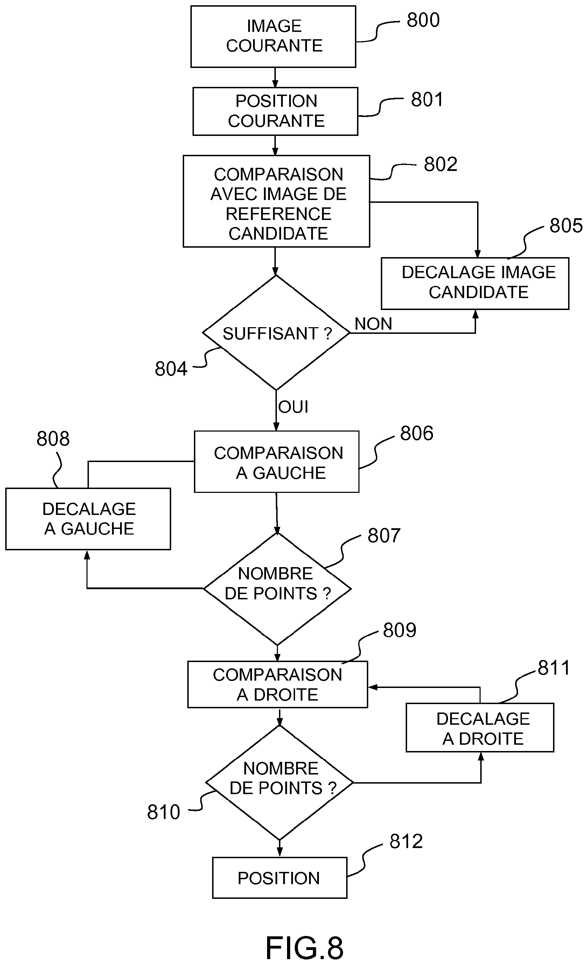

La figure 8 illustre une manière de choisir une image de référence dans un panorama et comment la position angulaire absolue du robot peut être estimée.

Après la phase d'apprentissage, la position angulaire absolue du robot peut être estimée à partir de l'image courante et de l'odométrie du robot.

Dans un premier temps, une image courante est acquise 800.

Ensuite, la position angulaire courante du robot est estimée (étape 801) à partir de l'estimation de position angulaire précédente et de la mesure du déplacement par l'odométrie. Cette estimation n'est pas forcément précise mais permet de lancer la recherche de la meilleure image de référence qui permettra d'estimer le plus précisément possible la position absolue du robot.

L'image du panorama associée à la position angulaire considérée comme la plus proche de la position angulaire estimée 801 est sélectionnée comme image de référence candidate et ses points d'intérêts sont appariés avec les points d'intérêt de l'image courante (étape 802).

Un test 804 est ensuite appliqué, ledit test ayant pour fonction de comparer le nombre de paires identifiées à l'étape 802 avec un nombre de paires obtenues à l'itération précédente, c'est-à-dire avec une autre image de référence candidate ayant été précédemment sélectionnée le cas échéant.

Si le nombre de paires identifiées à l'étape 802 correspond à un pourcentage inférieur ou égal à une valeur P prédéfinie, une image de référence voisine dans le panorama de l'image de référence utilisée pour cet appariement est à son tour sélectionnée 805 comme image de référence candidate. A titre d'exemple, P = 30%. Cette nouvelle image de référence candidate est choisie dans le panorama de manière à ce que l'on s'éloigne de plus en plus d'une itération à l'autre de l'image du panorama sélectionnée initialement par le procédé. L'étape 802 est alors de nouveau appliquée.

Si le résultat du test 804 donne un nombre de paires correspondant à un pourcentage supérieur à la valeur P prédéfinie, l'image de référence candidate est considérée comme satisfaisante et est appelée image I.

Une fois qu'une image de référence candidate I jugée satisfaisante a été trouvée, l'image courante est comparée 806 avec l'image $I_g$ située à gauche de I dans le panorama.

Si le nombre de points d'intérêts appariés est plus important que pour l'image I 807, alors la nouvelle image candidate est l'image $I_g$ 808, soit I = $I_g$.

Si le nombre de points d'intérêts appariés est plus faible avec l'image $I_g$ qu'avec l'image I, l'image courante est comparée 809 avec l'image $I_d$ située à droite de I dans le panorama.

Si le nombre de points d'intérêts appariés est plus important que pour l'image I de référence 10, alors la nouvelle image candidate est l'image $I_d$ 811, soit I = $I_d$.

Une fois qu'une image I de référence a été sélectionnée, la position angulaire absolue est déterminée 812 en utilisant le procédé d'estimation de la déviation angulaire relative décrit précédemment en prenant comme entrées l'image courante et l'image de référence I sélectionnée dans le panorama. Ce procédé estime un décalage angulaire par rapport à une position angulaire initiale. La position absolue peut donc être déterminée sans ambiguïté car la position angulaire initiale est associée à l'image I de référence et peut être exprimée dans un repère fixe par rapport à l'environnement de navigation. Le décalage angulaire permet de déduire la position absolue du robot de la position angulaire initiale.

La figure 9 illustre une manière de contrôler les mouvements de rotation du robot à l'aide de l'estimation de position angulaire absolue.

Pour cela, l'estimation de la position absolue 900 est effectuée comme décrit précédemment (figure 8).

Ensuite, les paramètres permettant de contrôler le mouvement du robot sont déterminés 901 de manière de manière habituelle afin d'atteindre une destination préalablement choisie.

L'image du panorama associée au cap à emprunter pour mettre en oeuvre le mouvement est sélectionné 902.

Le capteur d'images embarqué est dirigé 903 dans la direction du cap mentionné ci-dessus de manière à acquérir les images courantes. Si le capteur est embarqué sur la tête mobile d'un robot humanoïde, c'est la tête qui effectue ce mouvement.

Tant que des points de l'image courante peuvent être appariés avec des points de l'image cible, le mouvement du robot est mis en oeuvre 904 avec contrôle de la dérive angulaire. Si le contrôle du mouvement par compensation de la dérive angulaire n'est plus efficace, le mouvement peut être contrôlé à l'aide de l'odométrie du robot.

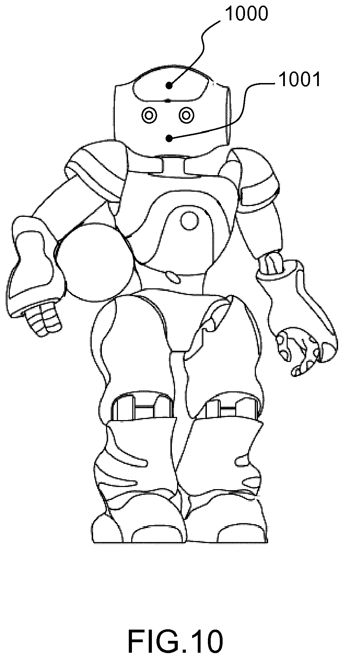

La figure 10 représente un robot humanoïde pouvant mettre en oeuvre les différentes techniques d'estimation de la dérive angulaire, de détermination de la position angulaire relative et absolue et de contrôle de mouvement telles que décrites précédemment. L'exemple choisi pour cette figure est un robot NAO (marque déposée) de la société Aldebaran Robotics. Le robot comprend deux capteurs 1000, 1001 embarqués sur une tête pouvant effectuer un mouvement circulaire de trois cent soixante radians.

La tête permet de doter le robot des capacités sensorielles et d'expressions qui sont utiles à la mise en oeuvre de la présente invention.

Le robot comprend par exemple deux caméras CMOS 640x480 capables de capter jusqu'à trente images par seconde, par exemple des caméras dont le capteur est de marque Omnivision™ de référence 0V7670 (capteur CMOS 1/6ème pouce : pixels de 3,6 μm). La première caméra 1000 placée au niveau du front, est pointée vers son horizon, alors que la seconde 1001 placée au niveau de la bouche, scrute son environnement immédiat. Le logiciel permet d'acquérir des photos de ce que voit le robot ainsi que le flux vidéo. Dans cet exemple, la première caméra 1000 peut être utilisée pour acquérir les images courantes et les images de référence pour la mise en oeuvre des procédés d'estimation de la position angulaire relative et absolue du robot ainsi que pour la mise en oeuvre des procédés de contrôle de mouvement décrits précédemment.

Dans la description, ces procédés ont été décrits dans le cadre d'une mise en oeuvre sur un robot, et plus particulièrement sur un robot humanoïde. Cependant, l'invention est applicable pour déterminer la position angulaire de tout élément mobile. En particulier, l'invention est applicable à tout type de véhicules, bateaux ou aéronefs.

A titre d'exemple, l'invention peut être appliquée pour une voiture comprenant un récepteur GPS (Global Positioning System) ayant été adapté pour mettre en oeuvre l'invention. Avantageusement, les estimations de dérive angulaire et/ou de position angulaire absolue permettent de corriger des mesures GPS, notamment lorsqu'un nombre trop réduit de satellites est visible par ledit récepteur.

## Revendications

**1.** Procédé d'estimation de la déviation angulaire d'un élément mobile relativement à une direction de référence, le procédé comprenant les étapes suivantes :

- acquisition d'une image de référence (101) représentative d'une direction de référence de l'élément mobile ;
- acquisition d'une image courante (102) représentative de la direction courante de l'élément mobile ;
- identification de points d'intérêt dans l'image de référence et dans l'image courante (103) ;
- détermination d'au moins deux paires de points d'intérêt (104), une paire étant composée d'un point d'intérêt de l'image courante et d'un point d'intérêt lui correspondant dans l'image de référence ;
- détermination de la déviation angulaire (105) entre la direction courante et la direction de référence de l'élément mobile en utilisant les au moins deux paires de points identifiées à l'étape précédente; **caractérisé en ce que**:
- la fréquence de rafraichissement de l'image courante étant adaptée en fonction de la distance moyenne estimée entre les points d'intérêts identifiés dans l'image courante, la fréquence de rafraichissement étant augmentée lorsque les points d'intérêt se rapprochent les uns des autres.

**2.** Procédé selon la revendication 1 dans lequel les points d'intérêt sont associés à des descripteurs correspondant à des vecteurs binaires, l'étape de détermination des paires (104) étant mise en oeuvre par une comparaison de ces vecteurs deux à deux, un couple de points d'intérêt étant identifié lorsque les deux vecteurs de deux points d'intérêt sont considérés comme étant les plus proches par rapport à d'autres vecteurs candidats associés à d'autres points d'intérêt.

**3.** Procédé selon l'une des revendications précédentes dans lequel la déviation angulaire est déterminée (105) suivant les trois axes X, Y, Z d'un référentiel orthonormé fixe par rapport à l'élément mobile.

**4.** Procédé selon l'une des revendications précédentes comprenant une étape (106) de vérification de la qualité de l'estimation de la déviation angulaire, la qualité étant considérée suffisante lorsque le nombre de paires de points d'intérêt appariés (104) dépasse une valeur seuil prédéfinie.

**5.** Procédé selon la revendication 4 dans lequel une nouvelle image de référence est acquise (120) lorsque la qualité est considérée insuffisante.

**6.** Procédé selon l'une des revendications précédentes dans lequel la fréquence de rafraichissement de l'image de référence est adaptée en fonction de la qualité des points d'intérêt, ladite qualité étant estimée à partir du taux de points d'intérêt corrects et l'image de référence étant mise à jour dès que ce taux est inférieur à une valeur de seuil prédéfinie.

**7.** Procédé selon l'une des revendications précédentes dans lequel la direction de référence correspond à un cap cible que doit suivre l'élément mobile pour se déplacer, des commandes pour contrôler (203) le mouvement de l'élément mobile étant déterminées et appliquées de manière à ce que la déviation angulaire estimée (200) par le procédé soit minimisée (201, 202).

**8.** Procédé selon l'une des revendications précédentes dans lequel l'image de référence est choisie de manière à ce qu'elle reste au moins partiellement dans le champ de vision d'un capteur chargé d'acquérir l'image courante afin qu'un nombre minimum prédéfini de points d'intérêt puissent être appariés.

**9.** Procédé selon l'une des revendications précédentes dans lequel la déviation angulaire initialement estimée est de $\alpha$ radians par rapport à un cap cible que doit suivre l'élément mobile pour se déplacer, la direction de référence correspondant ensuite au cap cible auquel s'ajoute un écart angulaire de $-\alpha/2$ radians, des commandes pour contrôler le mouvement de l'élément mobile étant déterminées et appliquées de manière à ce que la déviation angulaire estimée par la suite soit le plus proche possible de $+\alpha/2$ radians.

**10.** Procédé selon l'une des revendications précédentes dans lequel l'image de référence est obtenue par un capteur d'images (1000) embarqué sur l'élément mobile et dirigé dans la direction de référence au moment de la prise de vue.

**11.** Procédé d'estimation de la position angulaire d'un élément mobile dans un repère fixe par rapport à un espace de navigation, le procédé comprenant les étapes suivantes :

- acquisition d'un panorama composé d'une pluralité d'images couvrant l'espace de navigation (600, 700), une image du panorama étant représentative d'une direction partant de l'élément mobile ;
- estimation de la position angulaire du mobile par odométrie ;
- sélection d'une image de référence parmi les images du panorama (601), ladite image correspondant à la position angulaire estimée à l'étape précédente ;
- estimation affinée de la position angulaire de l'élément mobile (602), ladite position angulaire étant déduite d'une dérive angulaire estimée par application du procédé selon l'une des revendications précédentes avec l'image de référence sélectionnée.

**12.** Procédé selon l'une des revendications précédentes dans lequel l'élément mobile est un robot de type humanoïde.

**13.** Procédé selon l'une des revendications précédentes dans lequel l'élément mobile est une voiture.

**14.** Robot humanoïde comprenant des moyens adaptés pour mettre en oeuvre le procédé selon l'une quelconque des revendications 1 à 13.

**15.** Programme d'ordinateur comportant des instructions pour l'exécution du procédé selon l'une quelconque des revendications 1 à 13, lorsque le programme est exécuté par un module de traitement de données.

**Patentansprüche**

**1.** Verfahren zur Schätzung der Winkelabweichung eines mobilen Elements in Bezug auf eine Referenzrichtung, wobei das Verfahren die folgenden Schritte umfasst:

- Erfassung eines Referenzbilds (101), das repräsentativ für eine Referenzrichtung des mobilen Elements ist;
- Erfassung eines aktuellen Bilds (102), das repräsentativ für die aktuelle Richtung des mobilen Elements ist;
- Identifizierung von Punkten von Interesse im Referenzbild und im aktuellen Bild (103);
- Bestimmung von mindestens zwei Paaren von Punkten von Interesse (104), wobei ein Paar aus einem Punkt von Interesse des aktuellen Bilds und einem Punkt von Interesse besteht, das ihm im Referenzbild entspricht;
- Bestimmung der Winkelabweichung (105) zwischen der aktuellen Richtung und der Referenzrichtung des mobilen Elements unter Verwendung von mindestens zwei Paaren identifizierter Paare im vorherigen Schritt, **dadurch gekennzeichnet, dass**:
- die Auffrischungshäufigkeit des aktuellen Bilds in Abhängigkeit vom geschätzten mittleren Abstand zwischen den Punkten von Interesse, die im aktuellen Bild identifiziert sind, angepasst ist, wobei die Auffrischungshäufigkeit erhöht wird, wenn sich die Punkte von Interesse aneinander annähern.

**2.** Verfahren nach Anspruch 1, wobei die Punkte von Interesse mit Deskriptoren assoziiert sind, die binären Vektoren entsprechen, wobei der Bestimmungsschritt von Paaren (104) durch einen Vergleich von jeweils zwei dieser Vektoren umgesetzt wird, wobei ein Paar von Punkten von Interesse identifiziert ist, wenn die zwei Vektoren von zwei Punkten von Interesse so betrachtet werden, dass sie in Bezug auf andere Kandidatenvektoren, die mit anderen Punkten von Interesse assoziiert sind, am nächsten sind.

**3.** Verfahren nach einem der vorherigen Ansprüche wobei die Winkelabweichung gemäß den drei Achsen X, Y, Z eines festgelegten orthonormierten Bezugssystems in Bezug auf das mobile Element bestimmt (105) wird.

**4.** Verfahren nach einem der vorherigen Ansprüche, umfassend einen Schritt (106) zur Überprüfung der Schätzung der Winkelabweichung, wobei die Qualität als ausreichend betrachtet wird, wenn die Anzahl der Paare von gepaarten Punkten von Interesse (104) einen vordefinierten Schwellenwert überschreitet.

**5.** Verfahren nach Anspruch 4, wobei ein neues Referenzbild erfasst wird (120), wenn die Qualität als unzureichend erachtet wird.

**6.** Verfahren nach einem der vorherigen Ansprüche, wobei die Auffrischungshäufigkeit des Referenzbilds in Abhängigkeit von der Qualität der Punkte von Interesse angepasst ist, wobei die Qualität anhand der Rate von korrekten Punkten von Interesse geschätzt wird, und wobei das Referenzbild aktualisiert wird, sobald diese Rate niedriger als ein vordefinierter Schwellenwert ist.

**7.** Verfahren nach einem der vorherigen Ansprüche, wobei die Referenzrichtung einer Zielrichtung entspricht, der dem mobilen Element für seine Bewegung folgen muss, wobei Befehle zum Steuern (203) der Bewegung des mobilen Elements so bestimmt und angewendet werden, dass die geschätzte Winkelabweichung (200) durch das Verfahren minimiert (201,202) ist.

8. Verfahren nach einem der vorherigen Ansprüche, wobei das Referenzbild so gewählt ist, dass es mindestens teilweise im Sichtfeld eines Sensors bleibt, der die Aufgabe hat, das aktuelle Bild aufzunehmen, damit eine vordefinierte Mindestanzahl von Punkten von Interesse gepaart werden können.

9. Verfahren nach einem der vorherigen Ansprüche, wobei die anfangs geschätzte Winkelabweichung $\alpha$ Radiant in Bezug auf eine Zielrichtung ist, der dem mobilen Element für seine Bewegung folgen muss, wobei die Referenzrichtung dann der Zielrichtung entspricht, zu der eine Winkelabweichung von $-\alpha/2$ Radiant hinzugefügt wird, wobei die Befehle zum Steuern der Bewegung des mobilen Elements so bestimmt und angewendet werden, dass die geschätzte Winkelabweichung danach so nahe wie möglich bei $+\alpha/2$ Radiant ist.

10. Verfahren nach einem der vorherigen Ansprüche, wobei das Referenzbild durch einen Bildsensor (1000) an Bord des mobilen Elements und im Moment der Bildaufnahme gerichtet in die Referenzrichtung erlangt wird.

11. Schätzungsverfahren der Winkelposition eines mobilen Elements in einem festen Koordinatensystem in Bezug auf einen Navigationsraum, wobei das Verfahren die folgenden Schritte umfasst:

    - Erfassung eines Panoramabilds bestehend aus einer Vielzahl von aktuellen Bildern, die den Navigationsraum (600, 700) abdecken, wobei ein Bild des Panoramabilds repräsentativ für eine fortgehende Richtung des mobilen Elements ist;
    - Schätzung der Winkelposition des mobilen Elements durch Odometrie;
    - Auswahl eines Referenzbilds unter den Panoramabildern (601), wobei das Bild der geschätzten Winkelposition im vorherigen Schritt entspricht;
    - verfeinerte Schätzung der Winkelposition des mobilen Elements (602), wobei die Winkelposition von einer geschätzten Winkelabweichung durch Anwendung des Verfahrens nach einem der vorherigen Ansprüche mit dem ausgewählten Referenzbild abgeleitet wird.

12. Verfahren nach einem der vorherigen Ansprüche, wobei das mobile Element ein menschenähnlicher Roboter ist.

13. Verfahren nach einem der vorherigen Ansprüche, wobei das mobile Element ein Auto ist.

14. Menschenähnlicher Roboter, umfassend Mittel, die angepasst sind, um das Verfahren nach einem der Ansprüche 1 bis 13 umzusetzen.

15. Computerprogramm, umfassend Anweisungen zur Ausführung des Verfahrens nach einem der Ansprüche 1 bis 13, wenn das Programm von einem Datenverarbeitungsmodul ausgeführt wird.

**Claims**

1. A method for estimating the angular deviation of a moving element relative to a reference direction, the method comprising the following steps:

    - acquisition of a reference image (101) that is representative of a reference direction of the moving element;
    - acquisition of a current image (102) that is representative of the current direction of the moving element;
    - identification of points of interest in the reference image and in the current image (103);
    - determination of at least two pairs of points of interest (104), one pair being made up of a point of interest in the current image and of a point of interest corresponding thereto in the reference image;
    - determination of the angular deviation (105) between the current direction and the reference direction of the moving element by using the at least two pairs of points identified in the preceding step; **characterised in that**:
    - the refresh rate of the current image is adapted according to the estimated mean distance between the points of interest identified in the current image, the refresh rate being increased when the points of interest approach one another.

2. The method according to Claim 1, wherein the points of interest are associated with descriptors corresponding to binary vectors, the step of determination of the pairs (104) being implemented by means of comparison of these vectors in twos, a couple of points of interest being identified when the two vectors of two points of interest are considered to be closest in relation to other candidate vectors associated with other points of interest.

3. The method according to either of the preceding claims, wherein the angular deviation is determined (105) along the three axes X, Y, Z of an orthonormal reference frame that is fixed in relation to the moving element.

4. The method according to any of the preceding claims, comprising a step (106) of verification of the quality of the estimation of the angular deviation, the quality being considered sufficient when the number of pairs of matched points of interest (104) exceeds a predefined threshold value.

5. The method according to Claim 4, wherein a new reference image is acquired (120) when the quality is considered insufficient.

6. The method according to any of the preceding claims, wherein the refresh rate of the reference image is adapted according to the quality of the points of interest, the quality being estimated from the level of correct points of interest and the reference image being updated as soon as this level is below a predefined threshold value.

7. The method according to any of the preceding claims, wherein the reference direction corresponds to a target course that the moving element must follow in order to move, commands for controlling (203) the movement of the moving element being determined and applied so that the angular deviation estimated (200) by the method is minimized (201, 202).

8. The method according to any of the preceding claims, wherein the reference image is chosen so that it remains at least partially in the field of vision of a sensor responsible for acquiring the current image so that a predefined minimum number of points of interest can be matched.

9. The method according to any of the preceding claims, wherein the initially estimated angular deviation is $\alpha$ radians in relation to a target course that the moving element must follow in order to move, the reference direction then corresponding to the target course to which an angular deviation of $-\alpha/2$ radians is added, commands for controlling the movement of the moving element being determined and applied so that the angular deviation estimated subsequently is as close as possible to $+\alpha/2$ radians.

10. The method according to any of the preceding claims, wherein the reference image is obtained by an image sensor (1000) that is onboard the moving element and directed in the reference direction at the moment of the shot.

11. A method for estimating the angular position of a moving element in a point of reference that is fixed in relation to a navigation space, the method comprising the following steps:

- acquisition of a panorama that is made up of a plurality of images covering the navigation space (600, 700), one image of the panorama being representative of a direction leaving the moving element;
- estimation of the angular position of the moving object by odometry;
- selection of a reference image from the images of the panorama (601), the image corresponding to the angular position estimated in the preceding step;
- refined estimation of the angular position of the moving element (602), the angular position being deduced from an angular drift estimated by application of the method according to any of the preceding claims with the selected reference image.

12. The method according to any of the preceding claims, wherein the moving element is a robot of humanoid type.

13. The method according to any of the preceding claims, wherein the moving element is an automobile.

14. A humanoid robot comprising means adapted to implementing the method according to any of Claims 1 to 13.

15. A computer programme that has instructions for executing the method according to any of Claims 1 to 13 when the programme is executed by a data processing module.

FIG.1

FIG.2

FIG.3

FIG.4

FIG.5

EP 2 984 625 B1

FIG.6

FIG.7

FIG.9

FIG.8

1000

1001

FIG.10

## RÉFÉRENCES CITÉES DANS LA DESCRIPTION

**Littérature non-brevet citée dans la description**

- **ERIC ROYER et al.** Monocular Vision for Mobile Robot Localization and Autonomous Navigation. *IJCV 2007*
- **A VISUAL COMPASS BASED ON SLAM ; MONTIEL J.M.M et al.** *ICRA 2006*
- **BELLOTTO et al.** Appearance-based localization for mobile robots using digital zoom and visual compass. *Robotics and autonomous systems,* 2008
- **WIRBEL E. et al.** Humanoid robot navigation: From visual SLAM to a visual compass. *ICNSC,* 2013